# FASCICULE DE BREVET EUROPEEN

(11) **EP 3 830 439 B1**
(45) Date de publication et mention de la délivrance du brevet: **15.02.2023**
(21) Numéro de dépôt: 19750063.0
(22) Date de dépôt: 19.07.2019
(51) Int. Cl.: F16D 21/06, F16D 13/64, F16D 25/0638, F16D 25/08

(54) **DOUBLE EMBRAYAGE HUMIDE AVEC BUTÉE DE SÉCURITÉ APTE À LIMITER LA COURSE D'UN PISTON DU SYSTÈME DE COMMANDE**
NASSE DOPPELKUPPLUNG MIT EINEM SICHERHEITSANSCHLAG ZUR BEGRENZUNG DES WEGES EINES KOLBENS DES STEUERUNGSSYSTEMS
WET DOUBLE CLUTCH WITH A SAFETY STOP CAPABLE OF LIMITING THE TRAVEL OF A PISTON OF THE CONTROL SYSTEM

(30) Priorité: 03.08.2018 FR 1857278
(43) Date de publication de la demande: 09.06.2021
(73) Titulaire: VALEO EMBRAYAGES, 80009 Amiens (FR)
(72) Inventeur: DOLE, Arnaud, 95892 CERGY PONTOISE (FR); VUAROQUEAUX, Guillaume, 95892 CERGY PONTOISE (FR)
(74) Mandataire: Valeo Powertrain Systems
(86) Numéro de dépôt international: PCT/EP2019/069588
(87) Numéro de publication internationale: WO 2020/025362

(56) Documents cités:
- EP-A1- 3 133 308
- WO-A2-2016/019958
- DE-A1-102015 202 526
- FR-A1- 3 049 024

## Description

### Domaine technique

L'invention se rapporte au domaine des transmissions pour véhicule automobile.

L'invention concerne plus particulièrement un double embrayage humide destiné à être disposé, dans une chaîne de transmission d'un véhicule automobile, entre un bloc moteur et une boîte de vitesses comprenant deux arbres d'entrée.

### Arrière-plan technologique

Un double embrayage humide comporte un moyeu d'entrée destiné à être solidarisé en rotation à un volant moteur fixé au vilebrequin du moteur et deux embrayages comportant chacun un porte-disque d'entrée lié en rotation au moyeu d'entrée, un porte-disque de sortie lié en rotation à l'un ou l'autre des deux arbres d'entrée d'une boîte de vitesses et un ensemble multidisques qui est destiné à transmettre un couple entre le porte-disque d'entrée et le porte-disque de sortie dudit embrayage lorsque ledit embrayage est dans sa position embrayée.

L'un des arbres d'entrée de la boîte de vitesses, lié en rotation au porte-disque de sortie de l'un des embrayages, correspond aux rapports impairs de la boîte de vitesses tandis que l'autre arbre d'entrée, lié en rotation au porte-disque de sortie de l'autre embrayage, correspond aux rapports pairs. Ainsi, pour effectuer un changement de rapport, l'un des embrayages est déplacé de sa position embrayée vers sa position débrayée tandis que l'autre embrayage est déplacé de sa position débrayée vers sa position embrayée. Un tel double embrayage permet ainsi de changer de rapport de vitesse sans rupture de couple.

Il est connu, par exemple du document DE102014212805, des doubles embrayages humides avec au moins un porte-disque d'entrée, qui sont actionnés au moyen d'un système hydraulique de commande comportant, un carter, destiné à être fixé sur la boîte de vitesses, présentant deux chambres annulaires concentriques et deux pistons annulaires mobiles axialement respectivement dans l'une et l'autre des deux chambres annulaires. Chacun des pistons porte une butée tournante qui est en appui contre un organe de transmission de force coopérant avec l'un ou l'autre des deux embrayages de sorte à déplacer ledit embrayage entre une position débrayée et une position embrayée lors du mouvement du piston à l'intérieur de sa chambre annulaire respective. Un tel système de commande permet de limiter le couple de trainée et offre, par conséquent, des performances de consommation énergétique satisfaisantes.

Pour des raisons de sécurité, il convient de limiter la course des pistons en direction d'un palier de guidage logeant au moins un des portes-disques d'entrée des doubles embrayages humides, afin de garantir que lesdits pistons ne puissent pas s'échapper de leur chambre respective en cas de fonctionnement anormal du double embrayage humide, par exemple en cas de surpression dans les chambres annulaires ou de chocs de fin de course des pistons annulaires. En effet, à défaut, l'expulsion d'un des pistons hors de sa chambre est susceptible d'entraîner des défaillances et/ou des endommagements du double embrayage humide et/ou de la boîte de vitesses.

Il est connu par exemple du document DE102015219621 des systèmes hydrauliques de commande dans lesquels un élément de butée indépendant, par exemple un circlip, est monté dans une gorge placée à proximité de l'extrémité de la chambre. Ce dernier est apte à limiter le mouvement du piston afin d'éviter que ledit piston ne s'échappe de la chambre. Toutefois, un tel agencement augmente la complexité et le coût du système hydraulique de commande.

Un tel double embrayage n'est donc pas pleinement satisfaisant. D'autres exemples sont divulgués par le document FR3049024.

### Résumé

Une idée à la base de l'invention est de résoudre les inconvénients de l'art antérieur en proposant un double embrayage humide qui soit simple et fiable.

Selon un premier aspect de l'invention, on atteint au moins l'un des objectifs précités avec un double embrayage humide destiné à transmettre un couple dans une chaîne de transmission de véhicule automobile, entre un moteur présentant un vilebrequin et une boîte de vitesses comprenant deux arbres coaxiaux d'entrée s'étendant selon un axe O, ledit double embrayage humide comportant un premier et un deuxième embrayages, de type multidisques, le premier embrayage étant situé radialement à l'extérieur du deuxième embrayage, chacun des premier et deuxième embrayages comportant :
- un porte-disque d'entrée fixé à un moyeu d'entrée commun au premier et deuxième embrayage et destiné à être couplé en rotation au vilebrequin ;
- un organe de transmission de force mobile en translation selon l'axe O de manière à actionner l'ensemble multidisques de l'embrayage de sa position débrayée vers sa position embrayée, ledit double embrayage humide comportant en outre un système de commande comportant :
- un carter destiné à être fixé sur la boîte de vitesses et comportant une portée d'extension axiale s'étendant en direction du moyeu d'entrée, les premier et deuxième embrayages étant en appui sur la portée d'extension axiale,
- un premier et un deuxième pistons concentriques portant respectivement une première et une deuxième butées tournantes coopérant respectivement avec l'organe de transmission de force du premier et du deuxième embrayages, le premier piston étant situé radialement à l'extérieur du deuxième piston et de la portée d'extension axiale ;

ledit double embrayage humide comportant une surface de butée apte à limiter le déplacement axial de l'organe de transmission de force du premier embrayage en direction de l'ensemble multidisques,
la surface de butée étant placée à une distance axiale Y1 de l'organe de transmission de force du premier embrayage lorsque le premier embrayage est en position débrayée,
la surface de butée se situant radialement entre le diamètre extérieur db de la première butée tournante et le diamètre extérieur dp de la portée d'extension axiale.

Le premier aspect de l'invention présente l'avantage de limiter la course globale du premier piston. Cette course globale dépend de l'usure de l'ensemble multidisques et des déformations des composants internes du double embrayage humide, ce qui a pour effet de décaler le premier piston en direction du vilebrequin au fur et à mesure de l'usage de celui-ci.

Ainsi, le premier aspect de l'invention présente l'avantage de limiter la déformée par flexion selon l'axe O de l'organe de transmission de force par rapport au premier piston étant donné que la surface de butée est située à proximité radiale de la première butée tournante. Lorsque l'organe de transmission de force du premier embrayage vient en appui sur la surface de butée, celui-ci ne fléchit pas ou très peu par rapport au premier piston. La course de l'organe de transmission de force correspond alors à la course du premier piston. Le déplacement global du premier piston est ainsi réduit. Le système de commande est alors plus compact axialement.

Avantageusement, le premier piston est mobile axialement dans une première chambre annulaire formée dans le carter entre la position débrayée de l'embrayage dans laquelle le piston est en appui sur le carter, et une position maximale embrayée dans laquelle le piston est sorti de la chambre du carter, ce déplacement correspondant à une distance X, la distance axiale Y1 étant inférieure à K x X , K étant un coefficient compris 0,01 et 0,99.

Le positionnement de la surface de butée à une distance axiale Y1 de l'organe de transmission de force, selon l'invention, présente l'avantage, d'améliorer la fiabilité du double embrayage humide car le premier piston ne peut plus s'échapper de la chambre annulaire du système de commande lorsque l'ensemble multidisques de l'embrayage E1 est complètement usé.

La course du premier piston est limitée selon la valeur du coefficient K et adaptée en fonction de la géométrie du système de commande et notamment de la géométrie de la première chambre et du premier piston. Ainsi, la fiabilité du double embrayage est assurée et cela, sans nécessiter l'ajout d'un circlip élastique de butée à l'extrémité de la chambre du système hydraulique de commande.

Il est possible désormais d'utiliser un système de commande standardisé pour différents types de transmission et d'adapter la course de déplacement du premier piston uniquement grâce à la géométrie interne du double embrayage humide associé.

Avantageusement, le coefficient K peut être compris entre 0,25 et 0,80.

De préférence, le coefficient de sécurité K peut être compris entre 0,40 et 0,70

Le coefficient K permet de garantir la sécurité de fonctionnement du système de commande. Le coefficient K est défini en fonction des tolérances de fabrication du système de commande et de la géométrie de la transmission.

Avantageusement, la première butée tournante du premier piston annulaire peut comporter une première bague tournante coopérant avec l'organe de transmission de force du premier embrayage, la surface de butée se situant radialement entre le diamètre extérieur db de la première bague tournante et le diamètre extérieur dp de la portée d'extension axiale du carter du système de commande.

Avantageusement, la surface de butée peut être formée sur le porte-disque d'entrée. La surface de butée, selon l'invention, présente l'avantage d'éviter l'adjonction d'une pièce supplémentaire au niveau du système hydraulique de commande, ce qui permet de simplifier la fabrication du double embrayage.

Avantageusement, la surface de butée peut être apte à venir en appui sur une surface plane du premier organe de transmission de force. La surface de butée, selon l'invention, présente l'avantage de réduire la pression de contact entre l'organe de transmission de force et le porte-disque d'entrée et d'éviter tout phénomène de matage entre les deux composants.

L'invention peut présenter l'une ou l'autre des caractéristiques décrites ci-dessous combinées entre elles ou prises indépendamment les unes des autres :
- le porte-disques d'entrée des embrayages peut être supporté sur la portée d'extension axiale du carter du système de commande par l'intermédiaire d'un palier de guidage en rotation du double embrayage humide autour de l'axe O ;
- la surface de butée peut être interposée axialement entre le palier de guidage et la première butée tournante. De cette façon, le contact mécanique est situé radialement à proximité des pistons du système de commande et la surface de butée, selon l'invention, présente alors l'avantage d'éviter la déformation par flexion de l'organe de transmission de force ;
- le palier de guidage peut être un roulement à billes, par exemple un roulement à billes à contact oblique ;
- le palier de guidage peut être un palier à aiguilles ;
- le porte-disque peut comprendre un voile interne ;
- le porte-disque d'entrée peut comprendre un porte-disque extérieur du premier embrayage, un porte-disque intérieur du deuxième embrayage et un voile interne disposé radialement à l'intérieur des porte-disques extérieur et intérieur ;
- le voile interne du porte-disque d'entrée peut comprendre une face latérale apte à recevoir la surface de butée. De cette manière, la surface de butée est formée directement sur un composant du double embrayage humide et évite l'adjonction d'une pièce supplémentaire ;
- la face latérale peut être orthogonale à l'axe O ;
- le voile interne sur sa périphérie interne peut former une cavité apte à recevoir le palier de guidage ;
- le voile interne peut comprendre un épaulement sur sa périphérie interne, ledit épaulement formant un volume interne apte à recevoir le palier de guidage ;
- la surface de butée peut être annulaire ;
- la surface de butée peut être continue ;
- la surface de butée peut être formée de portions de surface discontinues.

Une variante de l'invention, prise en combinaison avec le premier aspect de l'invention, peut présenter l'une ou l'autre des caractéristiques décrites ci-dessous :
- le premier organe de transmission de force du premier embrayage peut comprendre des segments d'arrêt disposés sur la périphérie interne dudit organe. Avantageusement, les segments d'arrêt sont aptes à venir en appui sur la surface de butée.
- les segments d'arrêt peuvent être répartis angulairement autour de l'axe O.
- les segments d'arrêt peuvent être formés à partir de pattes repliées.
- les segments d'arrêt du premier organe de transmission de force peuvent passer au travers d'orifices aménagés dans le deuxième organe de transmission de force du deuxième embrayage.
- les segments d'arrêt peuvent être disposés radialement entre le diamètre extérieur db de la première butée tournante et le diamètre extérieur dp de la portée d'extension axiale.

Une autre variante de l'invention, prise en combinaison avec le premier aspect de l'invention, peut présenter l'une ou l'autre des caractéristiques décrites ci-dessous :
- le voile interne peut comprendre une série d'ergots s'étendant axialement depuis un épaulement formé dans ledit voile.
- la série d'ergots peut être répartie angulairement autours de l'axe O.
- les ergots peuvent comprendre une pluralité de faces latérales orientées en direction du système de commande, cette pluralité de faces latérales formant la surface de butée.
- les ergots peuvent passer au travers d'orifices aménagés dans le deuxième organe de transmission de force du deuxième embrayage.
- les ergots peuvent être disposés radialement entre le diamètre extérieur de la première butée tournante et le diamètre extérieur de la portée d'extension axiale.
- la surface de butée peut être disposée axialement entre le premier et le deuxième organes de transmission de force.

### Brève description des figures

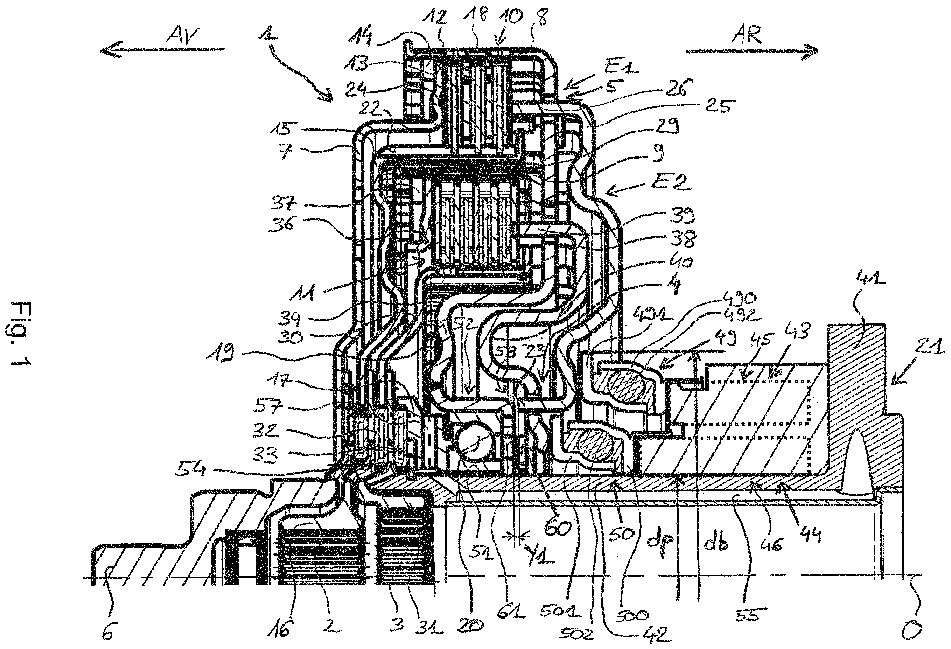

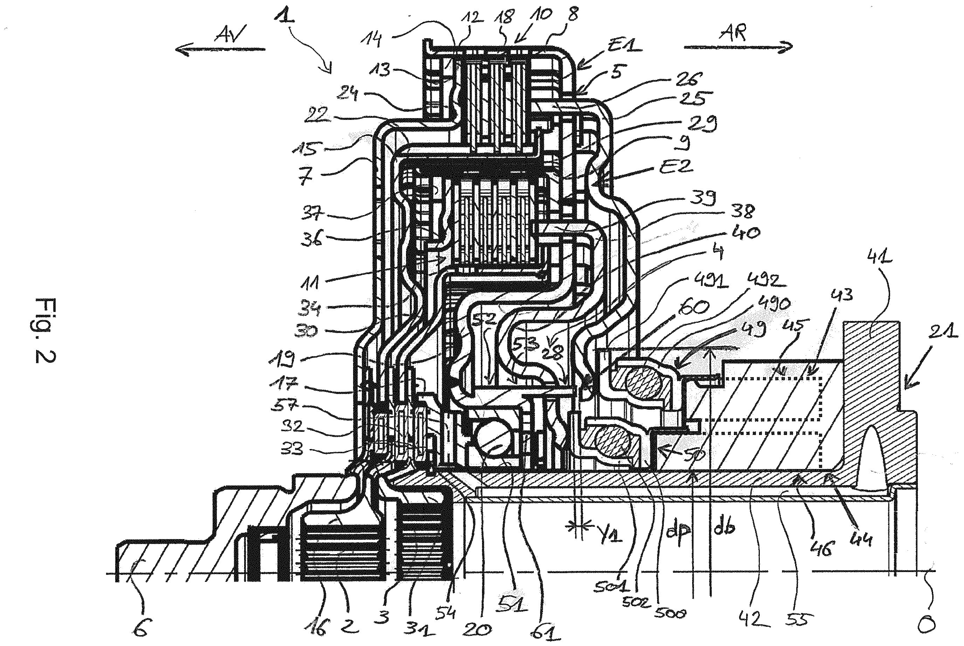

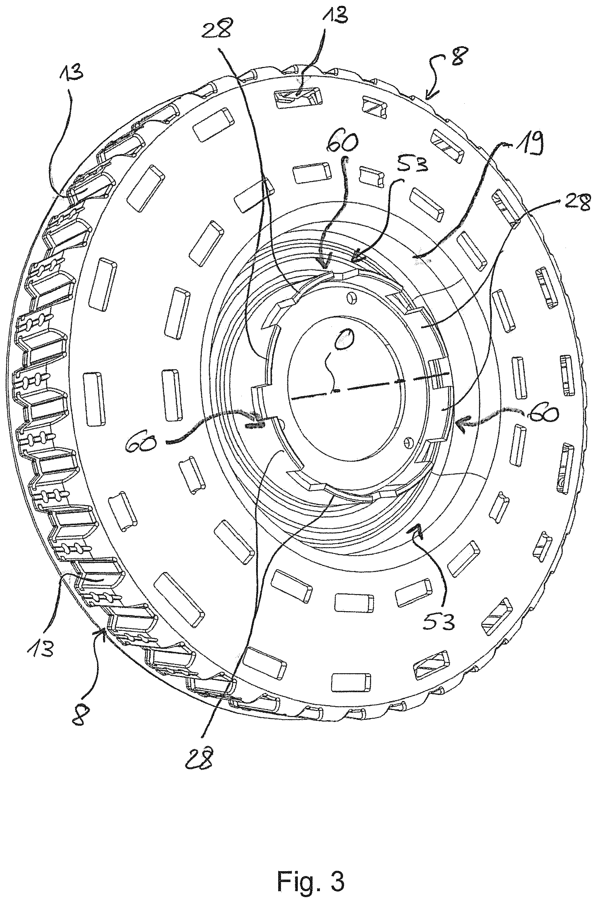

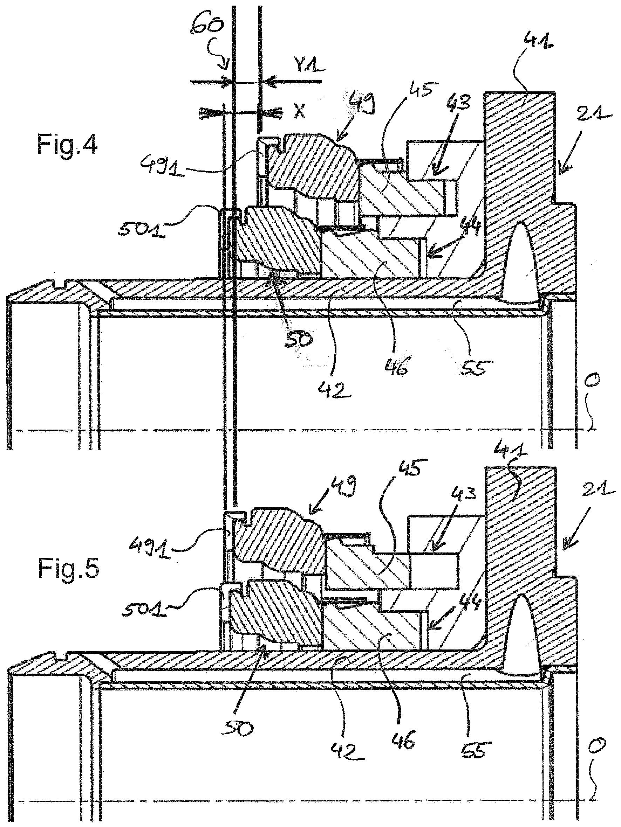

L'invention sera mieux comprise, et d'autres buts, détails, caractéristiques et avantages de celle-ci apparaîtront plus clairement au cours de la description suivante de plusieurs modes de réalisation particuliers de l'invention, donnés uniquement à titre illustratif et non limitatif, en référence aux dessins annexés.
- **La** **figure 1** est une vue en coupe axiale partielle d'un double embrayage humide selon un premier mode de réalisation.
- **La** **figure 2** est une vue en coupe axiale partielle d'un double embrayage humide selon un deuxième mode de réalisation.
- **La** **figure 3** est une vue isométrique du porte-disque d'entrée selon un deuxième mode de réalisation de la figure 2.
- **Les** **figures 4 et 5** sont des vues en coupe axiale partielle d'un système de commande d'un double embrayage humide associées au premier et deuxième modes de réalisation respectivement des figures 1 et 2.

### Description détaillée de modes de réalisation

Dans la description et les revendications, on utilisera, les termes "externe" et "interne" ainsi que les orientations "axiale" et "radiale" pour désigner, selon les définitions données dans la description, des éléments du double embrayage. Par convention, l'orientation "radiale" est dirigée orthogonalement à l'axe O de rotation du double embrayage déterminant l'orientation "axiale" et, de l'intérieur vers l'extérieur en s'éloignant dudit axe, l'orientation "circonférentielle" est dirigée orthogonalement à l'axe O et orthogonalement à la direction radiale. Les termes "externe" et "interne" sont utilisés pour définir la position relative d'un élément par rapport à un autre, par référence à l'axe O, un élément proche de l'axe O est ainsi qualifié d'interne par opposition à un élément externe situé radialement en périphérie. Par ailleurs, les termes "arrière" AR et "avant" AV sont utilisés pour définir la position relative d'un élément par rapport à un autre selon la direction axiale, un élément destiné à être placé proche du moteur thermique étant désigné par avant et un élément destiné à être placé proche de la boîte de vitesses étant désigné par arrière.

On a représenté sur la figure 1 un premier mode de réalisation du double embrayage humide 1. Le double embrayage humide 1 est destiné à être disposé entre un bloc moteur présentant un vilebrequin et une boîte de vitesses. Un tel double embrayage humide 1 vise à transmettre un couple du vilebrequin du moteur thermique sélectivement vers l'un ou l'autre des deux arbres 2, 3 coaxiaux d'entrée de la boîte de vitesses. L'arbre 2, intérieur, traverse le carter de la boîte de vitesses et s'étend longitudinalement selon l'axe O. L'arbre 3, creux, traverse également le carter de la boîte de vitesses et entoure l'arbre intérieur 2.

Le double embrayage humide 1 comporte deux embrayages E1, E2 de type multidisques, qui sont chacun destinés à accoupler temporairement le vilebrequin du moteur thermique à l'un des arbres 2, 3 d'entrée de la boîte de vitesses.

Le double embrayage 1 comprend un moyeu d'entrée 6 comportant des cannelures externes destinées à coopérer avec des cannelures complémentaires formées sur un élément fixé au vilebrequin du moteur thermique, tel qu'un volant moteur, simple ou double, non illustré.

Le double embrayage humide 1 est destiné à être logé dans un carter d'embrayage, non illustré, qui est fixé sur la boîte de vitesses. Le carter d'embrayage est fermé vers l'avant au moyen d'un capot de fermeture, non illustré, qui est guidé en rotation sur la surface cylindrique extérieure du moyeu d'entrée 6 au moyen d'un palier, non illustré. Le capot de fermeture porte au niveau de sa périphérie extérieure un joint annulaire qui coopère avec la surface intérieure du carter d'embrayage afin d'assurer l'étanchéité du double embrayage humide 1. Le double embrayage humide 1 comporte également un voile d'entrée 7 qui est soudé au moyeu d'entrée 6 ou formé d'un seul tenant avec celui-ci. Le voile d'entrée est lié en rotation à un porte-disque d'entrée de chacun des deux embrayages E1, E2.

Les deux embrayages E1, E2 comportent chacun un ensemble multidisques 10, 11, c'est-à-dire un empilement axial de disques de friction et de plateaux. Les ensembles multidisques 10, 11 de l'un et l'autre des deux embrayages sont disposés radialement l'un à l'intérieur de l'autre, selon une configuration dite radiale, de manière à limiter l'encombrement axial du double embrayage humide 1.

Sur la figure 1, le premier embrayage E1, c'est-à-dire l'embrayage dont l'ensemble multidisques 10 est radialement à l'extérieur de celui de l'autre embrayage E2, comporte un porte-disque extérieur 8 d'entrée qui est fixé sur le voile d'entrée 7. Pour ce faire, le voile d'entrée 7 présente sur sa périphérie extérieure une denture externe 12 qui coopère avec une denture interne 13 formée sur la surface interne du porte-disque extérieur 8 d'entrée du premier embrayage E1 de manière à solidariser en rotation le voile d'entrée 7 audit porte-disque extérieur 8 d'entrée. Par ailleurs, le voile d'entrée 7 est retenu axialement vers l'arrière par rapport au porte-disque extérieur 8 d'entrée du premier embrayage E1 au moyen d'un anneau d'arrêt 14. L'anneau d'arrêt 14 est par exemple un jonc de couplage élastique qui est logé dans une gorge ménagée au niveau de l'extrémité avant du porte-disque extérieur 8 d'entrée du premier embrayage E1. Le porte-disque extérieur 8 d'entrée comporte une jupe cylindrique 18 d'orientation axiale dans laquelle est ménagée une denture interne.

Le deuxième embrayage E2, c'est-à-dire l'embrayage dont l'ensemble multidisques 11 est disposé radialement à l'intérieur de celui de l'autre embrayage E1, présente une structure analogue au premier embrayage E1. Le deuxième embrayage E2 comporte un porte-disque intérieur 9 d'entrée solidaire en rotation du voile d'entrée 7. Pour ce faire, le porte-disque intérieur 9 d'entrée du deuxième embrayage E2 est fixé, par exemple par soudage, sur un voile interne 19 du porte-disque extérieur 8 d'entrée du premier embrayage E1. Le porte-disque intérieur 9 d'entrée comporte également une jupe cylindrique 29 d'orientation axiale dans laquelle est ménagée une denture interne.

Le porte-disque d'entrée 8, 9 est commun au premier et au deuxième embrayage E1, E2. Le porte-disque d'entrée 8, 9 comprend le porte-disque extérieur 8 d'entrée du premier embrayage E1, le porte-disque intérieur 9 d'entrée du deuxième embrayage E2 et le voile interne 19 disposé radialement à l'intérieur des porte-disques extérieur 8 et intérieur 9 d'entrée. Comme illustré sur la figure 1, le porte-disque extérieur 8 d'entrée du premier embrayage E1 est situé radialement à l'extérieur du porte-disque intérieur 9 d'entrée du deuxième embrayage E2. La jupe cylindrique 29 du porte-disque intérieur 9 d'entrée est ainsi disposée radialement à l'intérieur de la jupe cylindrique 22 du porte disque de sortie 15 du premier embrayage E1.

Plus précisément, le voile interne 19 de forme annulaire s'étend radialement vers l'intérieur à partir de l'extrémité arrière de la jupe cylindrique 18. Préférentiellement, le voile interne 19 et la jupe cylindrique 18 peuvent être formées d'un seul tenant, dans une même tôle, comme représenté sur les figures 1 et 2, ou être formées de deux pièces distinctes fixées l'une à l'autre. Le voile interne 19 comprend notamment un épaulement 53 formé sur sa périphérie interne, cet épaulement 53 forme un volume interne apte à recevoir un palier de guidage 20.

Le porte-disque d'entrée 8, 9 est monté tournant sur un système hydraulique de commande 21 par l'intermédiaire d'un palier de guidage 20, décrit de manière plus détaillée par la suite, qui coopère d'une part avec le système de commande 21 et d'autre part avec le voile interne 19. Le voile interne 19 présente également sur sa périphérie interne une cavité 52 apte à recevoir le palier de guidage 20. Le palier de guidage 20 est inséré dans la cavité 52 et vient en appui axial sur le porte-disque d'entrée 8, 9.

Le palier de guidage 20 est un roulement à billes et plus particulièrement un roulement à billes à contact oblique.

Sur la figure 1, le premier embrayage E1 comporte également un porte-disque de sortie 15 pouvant être fixé à un moyeu de sortie 16 ou formé d'un seul tenant avec celui-ci. Le moyeu de sortie 16 est cannelé et coopère avec des cannelures complémentaires ménagées sur le pourtour extérieur de l'extrémité de l'un des arbres d'entrée de la boîte de vitesses, ici l'arbre intérieur 2. Ainsi, le moyeu de sortie 16 du porte-disque de sortie 15 est solidaire en rotation de l'arbre intérieur 2. Le porte-disque de sortie 15 comporte une jupe cylindrique 22 d'orientation axiale qui est disposée radialement à l'intérieur de la jupe cylindrique 18 du porte-disque extérieur 8 d'entrée et dans laquelle est ménagée une denture externe.

Le deuxième embrayage E2 comporte également un porte-disque de sortie 30 qui est fixé à un moyeu de sortie 31 ou est formé d'un seul tenant avec celui-ci. Le moyeu de sortie 31 présente des cannelures internes qui coopèrent avec des cannelures complémentaires ménagées sur le pourtour extérieur de l'extrémité de l'un des arbres d'entrée de la boîte de vitesses, ici l'arbre extérieur 3.

Afin d'assurer le positionnement axial du porte-disque de sortie 30, un premier palier axial 32 est interposé entre le moyeu de sortie 16 du premier embrayage E1 et le moyeu de sortie 31 du deuxième embrayage E2, et un deuxième palier axial 33 est interposé entre le moyeu de sortie 31 du deuxième embrayage E2 et une bague de lubrification 17. Le porte-disque de sortie 30 comporte une jupe cylindrique 34 d'orientation axiale, disposée radialement à l'intérieur de la jupe cylindrique 29 du porte-disque intérieur 9 d'entrée et présentant une denture externe.

Comme illustré sur la figure 1, l'ensemble multidisques 10 du premier embrayage E1 comporte une pluralité de plateaux annulaires, en acier par exemple, qui sont solidaires en rotation du porte-disque extérieur 8 d'entrée et montés coulissants axialement par rapport audit porte-disque extérieur 8 d'entrée. Pour ce faire, chaque plateau comporte sur sa périphérie externe une denture externe qui est en prise avec la denture interne ménagée sur la face interne de la jupe cylindrique 18 du porte-disque extérieur 8 d'entrée.

L'ensemble multidisques 10 comporte en outre une pluralité de disques de friction qui sont chacun interposés entre deux plateaux et sont solidaires en rotation du porte-disque de sortie 15 avec une liberté de translation axiale. Pour ce faire, chaque disque de friction comporte sur sa périphérie interne une denture interne qui est en prise avec la denture externe portée par la jupe cylindrique 22 du porte-disque de sortie 15. Chaque disque de friction comporte des garnitures de friction disposées sur chacune de ses faces, avant et arrière.

L'ensemble multidisques 10 est en appui vers l'avant contre une zone de réaction formée sur le voile d'entrée 7. La zone de réaction est, dans le mode de réalisation représenté, ménagée à la faveur d'un rebord annulaire 24 formé à proximité du pourtour externe du voile d'entrée 7.

Par ailleurs, le plateau disposé à l'extrémité arrière de l'ensemble multidisques 10 coopère avec un organe de transmission de force 25 du premier embrayage E1. L'organe de transmission de force 25 est monté coulissant axialement et coopère avec le système hydraulique de commande 21, décrit de manière plus détaillée par la suite, qui est apte à faire coulisser axialement l'organe de transmission de force 25 vers l'avant afin de déplacer le premier embrayage E1 de sa position débrayée vers sa position embrayée. L'organe de transmission de force 25 est ici constitué d'une tôle métallique qui comporte, au niveau de sa périphérie externe, une pluralité de doigts 26 présentant une orientation axiale qui sont régulièrement répartis autour de l'axe O. Les doigts 26 passent au travers d'ouvertures 5 dédiée et formée dans le voile interne 19. Chaque doigt 26 est ainsi en appui contre le plateau disposé à l'extrémité arrière de l'ensemble multidisques 10 du premier embrayage E1.

Tel que représenté sur la figure 1, l'organe de transmission de force 25 est mobile en translation selon l'axe O, de manière à déplacer l'ensemble multidisques 10 de l'embrayage E1 de sa position débrayée vers sa position embrayée. Pour déplacer le premier embrayage E1 de sa position débrayée vers sa position embrayée, l'organe de transmission de force 25 est déplacé vers l'avant de manière à ce que chacun des disques de friction soit pincé entre deux plateaux et que le couple soit ainsi transmis entre le porte-disque extérieur 8 d'entrée du premier embrayage E1 et le porte-disque de sortie 15.

Lorsque l'ensemble multidisques est complètement usé, l'organe de transmission de force 25 est déplacé vers l'avant en direction du vilebrequin. Dans cette configuration d'usure, le mouvement du premier organe de transmission de force 25 du premier embrayage E1 en direction de l'ensemble multidisque 10 est limité par une surface de butée 60. La surface de butée 60 est placée à une distance axiale Y1 de l'organe de transmission de force 25 du premier embrayage E1 lorsque le premier embrayage E1 est en position débrayée. La surface de butée 60 est formée sur le porte-disque d'entrée 8, 9. Plus particulièrement, la surface de butée 60 est formée sur une face latérale 61 du voile interne 19 du porte disque 8, 9. Grâce à la surface de butée 60, la position embrayée maximale de l'embrayage n'est jamais atteinte.

A l'inverse, lorsque l'organe de transmission de force 25 n'est plus contraint vers l'avant, les disques de friction et les plateaux retrouvent leur position débrayée dans laquelle ils sont écartés axialement les uns des autres. Afin de faciliter le retour des disques de friction et des plateaux vers leur position débrayée, des rondelles élastiques ondulées, non illustrées, sont interposées entre les plateaux. Dans chaque intervalle entre deux plateaux voisins, une rondelle élastique est disposée radialement à l'extérieur du disque de friction située dans ledit intervalle.

L'ensemble multidisques 11 du deuxième embrayage E2 comporte une pluralité de plateaux annulaires présentant une structure analogue à celle des plateaux annulaires du premier embrayage E1. Chaque plateau comporte sur sa périphérie externe une denture externe qui coopère avec la denture complémentaire ménagée sur la face interne de la jupe cylindrique 29 du porte-disque d'entrée 9. L'ensemble multidisques 11 comporte en outre une pluralité de disques de friction présentant une structure analogue à ceux du premier embrayage 4 et sont montés solidaires en rotation du porte-disque de sortie 30 et coulissants axialement sur celui-ci. Pour ce faire, chaque disque de friction comporte sur sa périphérie interne une denture interne qui est en prise avec la denture externe ménagée sur la jupe cylindrique 34 du porte-disque de sortie 30. Chaque disque de friction est interposé entre deux plateaux. Le plateau, disposé à l'extrémité avant de l'ensemble multidisques 11 coopère avec un organe de réaction 36. L'organe de réaction 36 est quant à lui retenu vers l'avant au moyen d'un anneau d'arrêt 37 qui est fixé sur le porte-disque d'entrée 9 du deuxième embrayage E2, au niveau de l'extrémité avant de sa jupe cylindrique 34.

Le deuxième embrayage E2 est actionné au moyen d'un organe de transmission de force 38 qui, d'une part, coopère avec le plateau disposé à l'extrémité arrière de l'ensemble multidisques 11 du deuxième embrayage E2 et, d'autre part, coopère avec la système hydraulique de commande 21 qui est apte à le faire coulisser axialement vers l'avant de manière à déplacer le deuxième embrayage E2 de sa position débrayée vers sa position embrayée. Toujours de manière analogue, l'organe de transmission de force 38 constitué d'une tôle métallique comporte au niveau de sa périphérie externe une pluralité de doigts 39 d'orientation axiale régulièrement répartis autour de l'axe O. Chaque doigt 39 passe au travers d'une ouverture dédiée ménagée dans le porte-disque extérieur 8 d'entrée du premier embrayage E1 et est ainsi en appui contre le plateau disposé à l'extrémité arrière de l'ensemble multidisques 11 du deuxième embrayage E2.

Afin de limiter l'encombrement axial du double embrayage, les organes de transmission de force 38, 25 peuvent comporter au niveau de leur portion interne un renfoncement axial 40 vers l'avant à l'intérieur duquel est, au moins en partie, logé le système hydraulique de commande 21, comme illustré dans les figures 1 à 2.

Le double embrayage humide 1 comporte en outre un système hydraulique de commande 21 permettant d'actionner les deux embrayages E1, E2. Le système hydraulique de commande 21 comporte un carter 41 fixé contre une paroi de la boîte de vitesses, non illustrée.

Le carter 41 présente une portée d'extension axiale 42 s'étendant axialement autour de l'axe O et ménageant un espace interne sous la forme d'un tube interne, au travers duquel passent les arbres 2, 3 d'entrée de la boîte de vitesses. La portée d'extension axiale 42 du carter 41 s'étend en direction du moyeu d'entrée. Les premier et deuxième embrayages E1, E2 viennent ainsi en appui sur la portée d'extension axiale 42. La portée d'extension axiale 42 est issue de matière avec le carter 41 comme illustrée sur les figures 1 et 2.

Le carter 41 présente en outre une première et une deuxième chambres 43, 44 annulaires concentriques disposées radialement à l'extérieur de la portée d'extension axiale 42. La première chambre annulaire 43 est située radialement à l'extérieur de la deuxième chambre annulaire 44. Un premier et un deuxième pistons 45, 46 de forme annulaire sont respectivement montés mobiles en translation axiale à l'intérieur de la première et de la deuxième chambres 43, 44.

Chacun des premier et deuxième pistons 45, 46 concentriques porte une butée tournante 49, 50 qui est fixée à l'extrémité dudit piston 45, 46, comme illustrés dans les figures 1 et 2. Les butées tournantes 49, 50 coopèrent respectivement avec l'organe de transmission de force 25, 38 du premier et du deuxième embrayages E1, E2.

La première butée 49 comporte : une première bague tournante 491 qui est en appui contre l'un des organes de transmission de force 25, une première bague tournante 490 fixée au piston 43, et des corps roulants 492. La première bague tournante 491 de la première butée tournante 49 coopère avec le premier organe de transmission de force 25 du premier embrayage E1. Le diamètre extérieur de la première bague tournante 491 définit le diamètre extérieur db.

La deuxième butée 50 comporte : une deuxième bague tournante 501 qui est en appui contre l'un des organes de transmission de force 25, une deuxième bague tournante 500 fixée au piston 44, et des corps roulants 502. La deuxième bague tournante 501 de la deuxième butée tournante 50 coopère avec le deuxième organe de transmission de force 38 du deuxième embrayage E2.

Le carter 41 présente en outre, pour chacune des première et deuxième chambres 43, 44, un canal d'alimentation en fluide sous pression non représentée débouchant à l'intérieur de ladite chambre 43, 44 de sorte à permettre son alimentation en fluide. Chacun des canaux est raccordé à un circuit hydraulique équipé d'une pompe. La première et la deuxième chambres 43, 44 sont ainsi destinées à être alimenter en fluide pour provoquer le déplacement du piston 45, 46 vers l'avant, de la position débrayée de l'embrayage vers la position maximale embrayée de l'embrayage.

On observe par ailleurs que la portée d'extension axiale 42 du système hydraulique de commande 21 comporte une pluralité de canaux 55 de passage d'un fluide de refroidissement. Les canaux 55 sont équitablement répartis autour de l'axe O. Les canaux 55 sont raccordés à des orifices de sortie 57 formés sur la bague de lubrification 17. Les orifices de sortie 57 sont régulièrement répartis autour de l'axe O et débouchent radialement à l'intérieur des ensembles multidisques 10, 11. Les orifices de sortie 57 sont dirigés radialement vers l'extérieur afin de guider le fluide de refroidissement radialement vers l'extérieur en direction des ensembles multidisques 10, 11.

Les orifices de sortie des canaux 55 débouchent axialement au niveau de la portée d'extension axiale 42 sur laquelle est monté le palier de guidage 20. La portée d'extension axiale 42 présente une surface cylindrique de portée 51. La surface cylindrique de portée 51 définit un diamètre extérieur dp.

Comme illustré sur la figure 1, le roulement à billes 20 comporte : une bague intérieure qui est montée autour de la surface cylindrique de portée 51 de la portée d'extension axiale 42, une bague extérieure qui est montée à l'intérieur de la cavité 52 ménagée au niveau du bord radialement interne du voile interne 19, et des corps roulants, tels que des billes, interposés entre la bague extérieure et la bague intérieure.

Par ailleurs, la bague intérieure du roulement à billes 20 est retenue vers l'avant par la bague de lubrification 17. La bague de lubrification 17 est quant à elle retenu vers l'avant par un anneau élastique 54 du type « circlip » qui est monté dans une gorge ménagée dans portée d'extension axiale 42, au niveau de la surface cylindrique de portée 51. Le diamètre extérieur dp de la surface cylindrique de portée 51 est inférieur à l'alésage interne de l'organe de transmission de force 38.

On va maintenant décrire plus en détail l'invention suivant le premier mode de réalisation de l'invention comme illustré aux figures 1, 4 et 5.

De manière à réduire la flexion de l'organe de transmission de force 25, la surface de butée 60 est située radialement entre le diamètre extérieur db de la bague tournante de la première butée tournante 49 et le diamètre extérieur dp de la portée d'extension axiale 42.

Lorsque l'organe de transmission de force 25 est déplacé vers l'avant jusqu'à atteindre une position embrayée maximale de l'embrayage, la surface de butée 60 est en appui sur une surface plane 70 du premier organe de transmission de force 25 du premier embrayage E1. La surface de butée 60 est interposée axialement entre le palier de guidage 20 et la première butée tournante 491.

Sur les figures 4 à 5, le premier piston 45 est mobile axialement dans la première chambre annulaire 43 formée dans le carter 41 entre la position débrayée de l'embrayage dans laquelle le piston 45 est en appui sur le carter 41, et une position maximale embrayée dans laquelle le piston 45 est sorti de la chambre 43 du carter 41 du système de commande 21.

La figure 4 illustre la position débrayée de l'embrayage dans laquelle le piston 45 est en appui sur le carter 41.

La figure 5 illustre la position maximale embrayée dans laquelle le piston 45 est sorti de la chambre 43 du carter 41. Dans cette position, le système de commande 21 est défaillant.

Le déplacement entre les deux positions précédemment citées correspond à une distance X.

On définit la distance axiale Y1 de telle sorte que le piston 45 ne puisse pas sortir de la chambre 43 du carter 41. La distance axiale Y1 doit donc être strictement inférieure à la distance X. Afin de tenir compte des tolérances de fabrication du système de commande 21, on définit un coefficient de sécurité K compris 0,01 et 0,99 de telle sorte que la distance axiale Y1 est inférieur à K x X.

Le coefficient K peut être par exemple égal à 0,5, par exemple égal à 0,6, par exemple égal à 0,7, par exemple égal à 0,8, par exemple égal à 0,9.

Comme illustrée sur la figure 1, la surface de butée 60 est interposée axialement entre le palier de guidage 20 et la première butée tournante 49 du premier piston 45.

Le voile interne 19 du porte-disque d'entrée 8, 9, comprend la face latérale 61 apte à recevoir la surface de butée 60. Dans l'exemple du mode réalisation de la figure 1, la surface latérale 61 est orthogonale à l'axe O.

Avantageusement, la surface de butée 60 est annulaire.

Le premier organe de transmission de force 25 du premier embrayage E1 comprend des segments d'arrêt 23 disposés sur la périphérie interne dudit organe 25. Les segments d'arrêt 23 sont répartis angulairement autour de l'axe O. Les segments d'arrêt 23 sont formés à partir de pattes repliées.

Comme illustrés dans la figure 1, les segments d'arrêt 23 du premier organe de transmission de force 25 passent au travers d'orifices 4 aménagés dans le deuxième organe de transmission de force 38 du deuxième embrayage E2.

Sur la figure 1, les segments d'arrêt 23 sont disposés radialement entre le diamètre extérieur db de la première butée tournante 49 et le diamètre extérieur dp de la portée d'extension axiale 42.

Les figures 2 et 3 présentent un deuxième mode de réalisation de l'invention semblable au premier mode dans lequel la surface de butée 60 est constituée d'une série d'ergot 28 disposée sur le voile interne 19 du porte-disque d'entrée.

Le voile interne 19 comprend notamment un épaulement 53 formé sur sa périphérie interne, cet épaulement 53 forme un volume interne apte à recevoir le palier de guidage 20.

Le voile interne comprend une série d'ergots 28 s'étendant axialement depuis l'épaulement 53. La série d'ergots 28 est répartie angulairement autours de l'axe O. Dans l'exemple de la figure 3, la surface de butée 60 est formée de portions de surface discontinues.

Dans la figure 2, les ergots 28 comprennent une pluralité de faces latérales orientées en direction du système de commande 21, cette pluralité de faces latérales formant la surface de butée 60. Les ergots 28 passent au travers d'orifices 4 aménagés dans le deuxième organe de transmission de force 38 du deuxième embrayage E2. Les ergots 28 sont formés sur une couronne annulaire rapportée sur le porte-disque d'entrée 8, 9. Les ergots 28 sont fixés sur le porte-disque d'entrée 8, 9 par exemple par un procédé de soudure.

Les ergots 28 sont disposés radialement entre le diamètre extérieur db de la première butée tournante 49 et le diamètre extérieur dp de la portée d'extension axiale 42. La surface de butée 60 est disposée axialement entre le premier et le deuxième organes de transmission de force 25, 38, comme illustrée sur la figure 2.

L'invention n'est pas limitée aux exemples de mise en oeuvre qui viennent d'être décrit. Bien que l'invention ait été décrite en liaison avec plusieurs modes de réalisation particuliers, il est bien évident qu'elle n'y est nullement limitée et qu'elle comprend tous les équivalents techniques des moyens décrits ainsi que leurs combinaisons si celles-ci entrent dans le cadre de l'invention.

L'usage du verbe « comporter », « comprendre » ou « inclure » et de ses formes conjuguées n'exclut pas la présence d'autres éléments ou d'autres étapes que ceux énoncés dans une revendication.

Dans les revendications, tout signe de référence entre parenthèses ne saurait être interprété comme une limitation de la revendication.

## Revendications

1. Double embrayage humide (1) destiné à transmettre un couple dans une chaîne de transmission de véhicule automobile, entre un moteur présentant un vilebrequin et une boîte de vitesses comprenant deux arbres (2, 3) coaxiaux d'entrée s'étendant selon un axe O, ledit double embrayage humide (1) comportant un premier et un deuxième embrayages (E1, E2), de type multidisques, le premier embrayage (E1) étant situé radialement à l'extérieur du deuxième embrayage (E2), chacun des premier et deuxième embrayages (E1, E2) comportant:
- un porte-disque d'entrée (8, 9) fixé à un moyeu d'entrée (6) commun au premier et deuxième embrayage (E1, E2) et destiné à être couplé en rotation au vilebrequin;
- un ensemble multidisques (10, 11) connecté au porte-disque d'entrée (8, 9) ;
- un organe de transmission de force (25, 38) mobile en translation selon l'axe O de manière à actionner l'ensemble multidisques (10, 11) entre une position débrayée et une position embrayée de l'embrayage (E1, E2) ;
ledit double embrayage humide (1) comportant en outre un système de commande (21) comprenant :
- un carter (41) destiné à être fixé sur la boîte de vitesses et comportant une portée d'extension axiale (42) s'étendant en direction du moyeu d'entrée (6), les premier et deuxième embrayages (E1, E2) étant en appui sur la portée d'extension axiale (42),
- un premier et un deuxième pistons (45, 46) concentriques portant respectivement une première et une deuxième butées tournantes (49, 50) coopérant respectivement avec l'organe de transmission de force (25, 38) du premier et du deuxième embrayages (E1, E2), le premier piston (45) étant situé radialement à l'extérieur du deuxième piston (46) et de la portée d'extension axiale (42),
ledit double embrayage humide (1) comportant une surface de butée (60) apte à limiter le déplacement axial de l'organe de transmission de force (25) du premier embrayage (E1) en direction de l'ensemble multidisques (10),
la surface de butée (60) étant placée à une distance axiale Y1 de l'organe de transmission de force (25) du premier embrayage (E1) lorsque le premier embrayage (E1) est en position débrayée, **caractérisé en ce que**
la surface de butée (60) se situant radialement entre le diamètre extérieur (db) de la première butée tournante (49) et le diamètre extérieur (dp) de la portée d'extension axiale (42).

2. Double embrayage humide (1) selon la revendication précédente, dans lequel le premier piston (45) est mobile axialement dans une première chambre annulaire (43) formée dans le carter (41) entre la position débrayée de l'embrayage (E1) dans laquelle le piston (45) est en appui sur le carter (41), et une position maximale embrayée dans laquelle le piston (45) est sorti de la chambre (43) du carter (41), ce déplacement correspondant à une distance X, la distance axiale Y1 étant inférieure à K x X , K étant compris 0,01 et 0,99.

3. Double embrayage humide (1) selon l'une des revendications 1 ou 2, dans lequel la première butée tournante (49) du premier piston annulaire (45) comporte une première bague tournante (491) coopérant avec l'organe de transmission de force (25) du premier embrayage (E1), la surface de butée (60) se situant radialement entre le diamètre extérieur (db) de la première bague tournante (491) et le diamètre extérieur (dp) de la portée d'extension axiale (42) du carter (41) du système de commande (21).

4. Double embrayage humide (1) selon l'une quelconque des revendications précédentes, dans lequel la surface de butée (60) est formée sur le porte-disque d'entrée (8, 9).

5. Double embrayage humide (1) selon la revendication précédente, dans lequel le porte-disque (8, 9) comprend un voile interne (19) comprenant une face latérale (61) apte à recevoir la surface de butée (60).

6. Double embrayage humide (1) selon l'une quelconque des revendications précédentes, dans lequel dans lequel le porte-disque d'entrée (8, 9) des embrayages (E1, E2) est supporté sur la portée d'extension axiale (42) du carter (41) du système de commande (21) par l'intermédiaire d'un palier de guidage (20) en rotation du double embrayage humide (1) autours de l'axe O, la surface de butée (60) est interposée axialement entre le palier de guidage (20) et la première butée tournante (49).

7. Double embrayage humide (1) selon l'une quelconque des revendications précédentes, le premier organe de transmission de force (25) du premier embrayage (E1) comprend des segments d'arrêt (23) disposés sur la périphérie interne dudit organe (25), lesdits segments d'arrêt (23) étant aptes à venir en appui sur la surface de butée (60).

8. Double embrayage humide (1) selon la revendication précédente, dans lequel les segments d'arrêt (23) sont formés à partir de pattes repliées.

9. Double embrayage humide (1) selon l'une quelconque des revendications 7 à 8, dans lequel les segments d'arrêt (23) du premier organe de transmission de force (25) passent au travers d'orifices (4) aménagés dans le deuxième organe de transmission de force (38) du deuxième embrayage (E2).

10. Double embrayage humide (1) selon l'une quelconque des revendications 7 à 9, dans lequel les segments d'arrêt (23) sont disposés radialement entre le diamètre extérieur (db) de la première butée tournante (49) et le diamètre extérieur (dp) de la portée d'extension axiale (42).

11. Double embrayage humide (1) selon la revendication 4, lequel le porte-disque (8, 9) comprend un voile interne (19) comprenant une série d'ergots (28) s'étendant axialement depuis un épaulement (53) formé dans ledit voile (19).

12. Double embrayage humide (1) selon la revendication précédente, dans lequel les ergots (28) comprennent une pluralité de faces latérales orientées en direction du système de commande (21), cette pluralité de faces latérales forme la surface de butée (60).

13. Double embrayage humide (1) selon la revendication précédente, dans lequel les ergots (28) passent au travers d'orifices aménagés dans le deuxième organe de transmission de force (38) du deuxième embrayage (E2).

14. Double embrayage humide (1) selon l'une quelconque des revendications 11 à 13, dans lequel les ergots (28) sont disposés radialement entre le diamètre extérieur (db) de la première butée tournante (49) et le diamètre extérieur (dp) de la portée d'extension axiale (42).

15. Double embrayage humide (1) selon l'une quelconque des revendications 12 à 14, dans lequel la surface de butée (60) est disposée axialement entre le premier et le deuxième organes de transmission de force (25, 38).

## Patentansprüche

1. Nasse Doppelkupplung (1), welche dazu bestimmt ist, ein Drehmoment in einem Antriebsstrang eines Kraftfahrzeugs zwischen einem Motor, der eine Kurbelwelle aufweist, und einem Getriebe, das zwei sich entlang einer Achse 0 erstreckende koaxiale Eingangswellen (2, 3) umfasst, zu übertragen, wobei die nasse Doppelkupplung (1) eine erste und eine zweite Kupplung (E1, E2) vom Typ Lamellenkupplung aufweist, wobei sich die erste Kupplung (E1) radial außerhalb der zweiten Kupplung (E2) befindet, wobei die erste und die zweite Kupplung (E1, E2) jeweils aufweisen:
- einen Eingangslamellenträger (8, 9), der an einer Eingangsnabe (6) befestigt ist, die der ersten und der zweiten Kupplung (E1, E2) gemeinsam ist und dazu bestimmt ist, mit der Kurbelwelle drehgekoppelt zu werden;
- ein Lamellenpaket (10, 11), das mit dem Eingangslamellenträger (8, 9) verbunden ist;
- ein Kraftübertragungsorgan (25, 38), das entlang der Achse 0 so translatorisch beweglich ist, dass es das Lamellenpaket (10, 11) zwischen einer ausgerückten Position und einer eingerückten Position der Kupplung (E1, E2) betätigt;
wobei die nasse Doppelkupplung (1) außerdem ein Steuerungssystem (21) aufweist, welches umfasst:
- ein Gehäuse (41), das dazu bestimmt ist, am Getriebe befestigt zu werden, und eine sich axial erstreckende Lagerfläche (42) aufweist, die sich in Richtung der Eingangsnabe (6) erstreckt, wobei die erste und die zweite Kupplung (E1, E2) auf der sich axial erstreckenden Lagerfläche (42) aufliegen,
- einen ersten und einen zweiten Kolben (45, 46), die konzentrisch sind und einen ersten bzw. einen zweiten rotierenden Anschlag (49, 50) tragen, der mit dem Kraftübertragungsorgan (25, 38) der ersten bzw. der zweiten Kupplung (E1, E2) zusammenwirkt, wobei sich der erste Kolben (45) radial außerhalb des zweiten Kolbens (46) und der sich axial erstreckenden Lagerfläche (42) befindet,
wobei die nasse Doppelkupplung (1) eine Anschlagfläche (60) aufweist, die geeignet ist, die axiale Verlagerung des Kraftübertragungsorgans (25) der ersten Kupplung (E1) in Richtung des Lamellenpakets (10) zu begrenzen,
wobei die Anschlagfläche (60) in einem axialen Abstand Y1 vom Kraftübertragungsorgan (25) der ersten Kupplung (E1) angeordnet ist, wenn sich die erste Kupplung (E1) in der ausgerückten Position befindet,
**dadurch gekennzeichnet, dass** sich die Anschlagfläche (60) radial zwischen dem Außendurchmesser (db) des ersten rotierenden Anschlags (49) und dem Außendurchmesser (dp) der sich axial erstreckenden Lagerfläche (42) befindet.

2. Nasse Doppelkupplung (1) nach dem vorhergehenden Anspruch, wobei der erste Kolben (45) in einer im Gehäuse (41) ausgebildeten ersten Ringkammer (43) zwischen der ausgerückten Position der Kupplung (E1), in welcher der Kolben (45) am Gehäuse (41) anliegt, und einer maximal eingerückten Position, in welcher sich der Kolben (45) aus der Kammer (43) des Gehäuses (41) hinausbewegt hat, axial beweglich ist, wobei diese Verschiebung einem Abstand X entspricht, wobei der axiale Abstand Y1 kleiner als K x X ist, wobei K zwischen 0,01 und 0,99 liegt.

3. Nasse Doppelkupplung (1) nach einem der Ansprüche 1 oder 2, wobei der erste rotierende Anschlag (49) des ersten ringförmigen Kolbens (45) eine erste rotierende Hülse (491) aufweist, die mit dem Kraftübertragungsorgan (25) der ersten Kupplung (E1) zusammenwirkt, wobei sich die Anschlagfläche (60) radial zwischen dem Außendurchmesser (db) der ersten rotierenden Hülse (491) und dem Außendurchmesser (dp) der sich axial erstreckenden Lagerfläche (42) des Gehäuses (41) des Steuerungssystems (21) befindet.

4. Nasse Doppelkupplung (1) nach einem der vorhergehenden Ansprüche, wobei die Anschlagfläche (60) am Eingangslamellenträger (8, 9) ausgebildet ist.

5. Nasse Doppelkupplung (1) nach dem vorhergehenden Anspruch, wobei der Lamellenträger (8, 9) eine innere Abdeckung (19) umfasst, die eine Seitenfläche (61) umfasst, die geeignet ist, die Anschlagfläche (60) aufzunehmen.

6. Nasse Doppelkupplung (1) nach einem der vorhergehenden Ansprüche, wobei der Eingangslamellenträger (8, 9) der Kupplungen (E1, E2) auf der sich axial erstreckenden Lagerfläche (42) des Gehäuses (41) des Steuerungssystems (21) über ein Führungslager (20) zur Drehführung der nassen Doppelkupplung (1) um die Achse 0 abgestützt wird, wobei die Anschlagfläche (60) axial zwischen dem Führungslager (20) und dem ersten rotierenden Anschlag (49) angeordnet ist.

7. Nasse Doppelkupplung (1) nach einem der vorhergehenden Ansprüche, wobei das Kraftübertragungsorgan (25) der ersten Kupplung (E1) Haltesegmente (23) umfasst, die auf dem Innenumfang des Organs (25) angeordnet sind, wobei die Haltesegmente (23) geeignet sind, an der Anschlagfläche (60) zur Anlage zu kommen.

8. Nasse Doppelkupplung (1) nach dem vorhergehenden Anspruch, wobei die Haltesegmente (23) von umgebogenen Laschen gebildet werden.

9. Nasse Doppelkupplung (1) nach einem der Ansprüche 7 bis 8, wobei die Haltesegmente (23) des ersten Kraftübertragungsorgans (25) durch Öffnungen (4) passen, die im zweiten Kraftübertragungsorgan (38) der zweiten Kupplung (E2) angeordnet sind.

10. Nasse Doppelkupplung (1) nach einem der Ansprüche 7 bis 9, wobei die Haltesegmente (23) radial zwischen dem Außendurchmesser (db) des ersten rotierenden Anschlags (49) und dem Außendurchmesser (dp) der sich axial erstreckenden Lagerfläche (42) angeordnet sind.

11. Nasse Doppelkupplung (1) nach Anspruch 4, wobei der Lamellenträger (8, 9) eine innere Abdeckung (19) umfasst, die eine Reihe von Nasen (28) umfasst, die sich von einem in der Abdeckung (19) ausgebildeten Absatz (53) aus axial erstrecken.

12. Nasse Doppelkupplung (1) nach dem vorhergehenden Anspruch, wobei die Nasen (28) mehrere Seitenflächen umfassen, die in Richtung des Steuerungssystems (21) ausgerichtet sind, wobei diese mehreren Seitenflächen die Anschlagfläche (60) bilden.

13. Nasse Doppelkupplung (1) nach dem vorhergehenden Anspruch, wobei die Nasen (28) durch Öffnungen passen, die im zweiten Kraftübertragungsorgan (38) der zweiten Kupplung (E2) angeordnet sind.

14. Nasse Doppelkupplung (1) nach einem der Ansprüche 11 bis 13, wobei die Nasen (28) radial zwischen dem Außendurchmesser (db) des ersten rotierenden Anschlags (49) und dem Außendurchmesser (dp) der sich axial erstreckenden Lagerfläche (42) angeordnet sind.

15. Nasse Doppelkupplung (1) nach einem der Ansprüche 12 bis 14, wobei die Anschlagfläche (60) axial zwischen dem ersten und dem zweiten Kraftübertragungsorgan (25, 38) angeordnet ist.

## Claims

1. A wet double clutch (1) intended to transmit a torque in a motor vehicle transmission chain between an engine having a crankshaft and a gearbox comprising two coaxial input shafts (2, 3) extending along an axis O, said wet double clutch (1) comprising first and second clutches (E1, E2), of the multidisk type, the first clutch (E1) being located radially outside the second clutch (E2), each of the first and second clutches (E1, E2) comprising:
- an input disk carrier (8, 9) fixed to an input hub (6) common to the first and second clutch (E1, E2) and intended to be coupled in rotation to the crankshaft;
- a multidisk assembly (10, 11) connected to the input disk carrier (8, 9);
- a force transmission member (25, 38) movable in translation along the axis O so as to actuate the multidisk assembly (10, 11) between a disengaged position and an engaged position of the clutch (E1, E2);
said wet double clutch (1) further comprising a control system (21) comprising:
- a housing (41) intended to be fixed to the gearbox and comprising an axially extending bearing surface (42) extending in the direction of the input hub (6), the first and second clutches (E1, E2) bearing on the axially extending bearing surface (42),
- first and second concentric pistons (45, 46) respectively carrying first and second rotating stops (49, 50) cooperating respectively with the force transmission member (25, 38) of the first and second clutches (E1 , E2), the first piston (45) being located radially outside the second piston (46) and the axially extending bearing surface (42),
said wet double clutch (1) comprising a stop surface (60) capable of limiting the axial movement of the force transmission member (25) of the first clutch (E1) in the direction of the multidisk assembly (10),
the stop surface (60) being placed at an axial distance Y1 from the force transmission member (25) of the first clutch (E1) when the first clutch (E1) is in the disengaged position, **characterized in that**,
the stop surface (60) is located radially between the outside diameter (db) of the first rotating stop (49) and the outside diameter (dp) of the axially extending bearing surface (42).

2. The wet double clutch (1) as claimed in the preceding claim, in which the first piston (45) is axially movable in a first annular chamber (43) formed in the housing (41) between the disengaged position of the clutch (E1) in which the piston (45) bears on the housing (41), and a maximum engaged position in which the piston (45) is moved out of the chamber (43) of the housing (41), this movement corresponding to a distance X, the axial distance Y1 being less than K x X, K being between 0.01 and 0.99.

3. The wet double clutch (1) as claimed in either of claims 1 and 2, in which the first rotating stop (49) of the first annular piston (45) comprises a first rotating ring (491) cooperating with the force transmission member (25) of the first clutch (E1), the stop surface (60) being located radially between the outside diameter (db) of the first rotating ring (491) and the outside diameter (dp) of the axially extending bearing surface (42) of the housing (41) of the control system (21).

4. A wet double clutch (1) as claimed in any one of the preceding claims, in which the stop surface (60) is formed on the input disk carrier (8, 9).

5. The wet double clutch (1) as claimed in the preceding claim, in which the disk carrier (8, 9) comprises an internal web (19) comprising a lateral face (61) able to receive the stop surface (60).

6. The wet double clutch (1) as claimed in any one of the preceding claims, in which the input disk carrier (8, 9) of the clutches (E1, E2) is supported on the axially extending bearing surface (42) of the housing (41) of the control system (21) via a guide bearing (20) for guiding the wet double clutch (1) in rotation about the axis O, the stop surface (60) being interposed axially between the guide bearing (20) and the first rotating stop (49).

7. The wet double clutch (1) as claimed in any one of the preceding claims, the first force transmission member (25) of the first clutch (E1) comprising arresting segments (23) arranged on the internal periphery of said member (25), said arresting segments (23) being able to come to bear on the stop surface (60).

8. The wet double clutch (1) as claimed in the preceding claim, in which the arresting segments (23) are formed from folded tabs.

9. The wet double clutch (1) as claimed in either one of claims 7 and 8, in which the arresting segments (23) of the first force transmission member (25) pass through orifices (4) made in the second force transmission member (38) of the second clutch (E2).

10. The wet double clutch (1) as claimed in any one of claims 7 to 9, in which the arresting segments (23) are arranged radially between the outside diameter (db) of the first rotating stop (49) and the outside diameter (dp) of the axially extending bearing surface (42).

11. The wet double clutch (1) as claimed in claim 4, in which the disk carrier (8, 9) comprises an internal web (19) comprising a series of lugs (28) extending axially from a shoulder (53) formed in said web (19).

12. The wet double clutch (1) as claimed in the preceding claim, in which the lugs (28) comprise a plurality of lateral faces oriented in the direction of the control system (21), this plurality of lateral faces forming the stop surface (60).

13. The wet double clutch (1) as claimed in the preceding claim, in which the lugs (28) pass through orifices made in the second force transmission member (38) of the second clutch (E2).

14. The wet double clutch (1) as claimed in any one of claims 11 to 13, in which the lugs (28) are arranged radially between the outside diameter (db) of the first rotating stop (49) and the outside diameter (dp) of the axially extending bearing surface (42).

15. The wet double clutch (1) as claimed in any one of claims 12 to 14, in which the stop surface (60) is arranged axially between the first and second force transmission members (25, 38).
